# EUROPÄISCHE PATENTSCHRIFT

(11) **EP 0 875 419 B1**
(45) Veröffentlichungstag und Bekanntmachung des Hinweises auf die Patenterteilung: **21.01.2004**
(21) Anmeldenummer: 98103418.4
(22) Anmeldetag: 27.02.1998
(51) Int. Cl.: B60N 3/00, B60N 3/02, B60R 13/02, B60R 11/00

(54) **Vorrichtung zur schraubenlosen Montage eines Ausstattungsteils**
Device for the screwless mounting of a lining
Dispositif pour le montage d'une garniture sans vis

(30) Priorität: 02.05.1997 DE 19718508
(43) Veröffentlichungstag der Anmeldung: 04.11.1998
(73) Patentinhaber: Johnson Controls Interiors GmbH & Co. KG, 42285 Wuppertal (DE)
(72) Erfinder: Jacquemin, Didier, 70300 Luxeuil Les Bains (FR)
(74) Vertreter: Hemmelmann, Klaus

(56) Entgegenhaltungen:
- EP-A- 0 346 158
- EP-A- 0 908 353
- WO-A-96/17178

## Beschreibung

Die Erfindung betrifft eine Vorrichtung gemäß dem Oberbegriff des Anspruchs 1.

Bei der Fahrzeugherstellung, insbesondere Automobilherstellung, werden in zunehmendem Maß zur Befestigung von Ausstattungsteilen schraubenlose Befestigungselemente oder Vorrichtungen verwendet, speziell zur Vormontage ganzer Baugruppen.

Bei einer aus WO96/17178 bekannten Vorrichtung ist der rahmenförmige Grundkörper nur an der Seite zugfest mit der Fahrzeug-Tragstruktur verbunden, an der ein Verriegelungselement einstückig am Grundkörper angeformt ist. Da das andere Verriegelungselement aufgrund der zum Einstecken in den Ausschnitt und zum Verriegeln hinter den Ausschnittsrändern erforderlichen Beweglichkeit vom Grundkörper getrennt ist, kann unter einer Last der Grundkörper an dieser nicht abgestützten Seite von der Tragstruktur oder einem dort an die Tragstruktur angelegten Ausstattungsteil abgehoben werden. Dies kann bei Ermüdung des Verbindungsbereiches zwischen dem Grundkörper und dem Verriegelungselement zu einem dauerhaft aufklaffenden Spalt führen. Ferner ist die lokale Belastung im Verbindungsbereich zwischen dem Grundkörper und dem einen Verriegelungselement unzweckmäßig hoch und läßt sich die eigentlich mit allen Verriegelungselementen erzeugbare Abstützkraft nur unzureichend nutzen, weil sozusagen nur ein Verriegelungselement trägt. Im Verbindungsbereich der beiden Verriegelungselemente sind seitlich abstehende Fixierzungen angeformt, die eine Vormontage der Vorrichtung in einer Ausnehmung eines Dachhimmels ermöglichen, der dann bei einem weiteren Montageschritt mit derselben Vorrichtung in der Fahrzeug-Tragstruktur verankert wird.

Der Erfindung liegt die Aufgabe zugrunde, eine Vorrichtung der eingangs genannten Art zu schaffen, bei deren Montage bequem ein allseits fester Sitz der Vorrichtung in der Fahrzeug-Tragstruktur erreichbar ist. Weiterhin soll die Vorrichtung die Möglichkeit einer bequemen und sicheren Fixierung in einem an der Fahrzeugtragstruktur zu befestigenden Ausstattungsteil ermöglichen.

Die gestellte Aufgabe wird erfindungsgemäß mit den Merkmalen des Anspruchs 1 gelöst.

Die herstellungs- und montagetechnisch günstige Formung des einen Verriegelungselementes ohne direkte Verbindung mit dem Grundkörper hat dank des Anschlagmechanismus in montierter Position der Vorrichtung keine negative Auswirkung mehr auf das Haltevermögen der Vorrichtung. Denn nach der erfolgten Montage, bei der die Beweglichkeit des Verriegelungselementes benötigt wird, ist der Grundkörper in Ausziehrichtung aus dem Ausschnitt der Fahrzeug-Tragstruktur fest mit dem dann ohnedies am Ausschnittsrand abgestützten Verriegelungselement verbunden. Auch hohe, an der Vorrichtung angreifende Kräfte können den Grundkörper nicht mehr einseitig von der Fahrzeug-Tragstruktur abheben. Diese hohen Kräfte werden ferner vorteilhaft in etwa gleichmäßig auf die Verriegelungselemente und von diesen auf die Tragstruktur übertragen.

Besonders zweckmäßig wird gemäß Anspruch 2 der Anschlagmechanismus mittels des Sperrkeils betätigt, sobald dieser zum endgültigen Sichern der Vorrichtung eingetrieben wird. Damit ist hohe Sicherheit gegeben, daß der Anschlagmechanismus auch tatsächlich und zwangsweise betätigt ist und den Grundkörper mit dem Verriegelungselement zugfest verbindet, sich nicht mehr selbsttätig lösen kann, und trotzdem für eine eventuelle Demontage nach Entnahme des Sperrkeils wieder lösbar ist.

Herstellungstechnisch einfach weist gemäß Anspruch 3 der Anschlagmechanismus wenigstens ein Eingriffsteil und ein Gegeneingriffsteil auf, die am Verriegelungselement bzw. am Grundkörper, zweckmäßigerweise jeweils einstückig, vorgesehen sind.

Gemäß Anspruch 4 lassen sich Eingriffs- und Gegeneingriffsteil formentechnisch einfach beherrschen. Sie benötigen wenig Bauraum und gewährleisten dennoch eine hochbelastbare und lösbare Kraftübertragung.

Gemäß Anspruch 5 wird durch die Anzugsschräge eine spielfreie Kopplung erreicht und kann, unter der Wirkung des Sperrkeils, der Grundkörper sogar mit Vorspannung gegen die Tragstruktur angezogen werden.

Gemäß Anspruch 6 ist die Vorrichtung formentechnisch günstig und lassen sich hohe Haltekräfte erzielen.

Gemäß Anspruch 7 wird die Gestaltfestigkeit der Vorrichtung durch den Flanschbereich erhöht. Außerdem ermöglicht der Flanschbereich eine großflächige Anlage an der Tragstruktur bzw. an einem zwischen der Tragstruktur und dem Grundkörper angeordneten Ausstattungsteil wie einem Fahrzeughimmel oder dgl.

Gemäß Anspruch 8 läßt sich die Vorrichtung zwecks Vormontage mittels des Flanschbereiches in einer Ausnehmung des Ausstattungsteils anbringen, der in einem weiteren Montageschritt mittels der Vorrichtung an der Tragstruktur festgelegt wird.

Gemäß Anspruch 9 läßt sich eine haltbare Vorfixierung der Vorrichtung an einem solchen Ausstattungsteil erzielen.

Eine besonders zweckmäßige Ausführungsform geht aus Anspruch 10 hervor. Diese Vorrichtung läßt sich bequem an einem Ausstattungsteil vorfixieren, der in einem späteren Montageschritt mittels der Vorrichtung an der Tragstruktur festgelegt wird. Die beweglichen Fixierzungen lassen die einfache Einführung der Verriegelungselemente und der Fixierzungen in die Ausnehmung des Ausstattungsteils zu. Die Fixierzungen werden nach dem Durchstecken durch die Ausnehmung erstdurch Betätigen der Verbindungseinrichtung in ihren Fixierstellungen gesichert, in denen sie einerseits den Grundkörper präzise positioniert und haltbar am Ausstattungsteil festlegen und die spätere Befestigung des Ausstattungsteils mittels der Vorrichtung an der Tragstruktur nicht mehr behindern. Die Verbindungseinrichtung ist lösbar, so daß die Vorrichtung jederzeit wieder demontiert werden kann. Die Haltekraft der Verbindungseinrichtung sollte zumindest so groß sein, daß transportbedingte Erschütterungen des mit solchen Vorrichtungen bestückten Ausstattungsteils die vorfixierten Vorrichtungen nicht mehr lösen.

Gemäß Anspruch 11 ist die Vorrichtung ein einstückiger Kunststoff-Spritzguß-Formteil mit allen beweglichen und nicht-beweglichen Komponenten, vorzugsweise auch mit einer Verschlußklappe, die an der Sichtseite des Grundkörpers die Einführöffnung für die Verriegelungselemente abdeckt und zweckmäßigerweise auch den Sperrkeil trägt. Die Verschlußkappe könnte allerdings auch ein getrennt hergestellter Teil sein.

Gemäß Anspruch 12 dient die Vorrichtung zum Montieren eines Dachhimmels an einem Karosserieblech eines Kraftfahrzeuges, wobei der Dachhimmel bereits in einem Vormontageschritt mit wenigstens einer solchen Vorrichtung bestückbar ist.

Gemäß Anspruch 13 läßt sich mittels der Vorrichtung ein Haltegriff an der Tragstruktur festlegen, wobei der Haltegriff bei der Vormontage der Vorrichtung an einem Dachhimmel schon am Lagerbock montiert sein könnte, oder erst nachträglich montiert wird.

Gemäß Anspruch 14 wird mit der Vorrichtung sowohl der Dachhimmel als auch der Haltegriff an der Tragstruktur festgelegt, wobei die Vorrichtung mit oder ohne Traggriff zuvor bereits am Dachhimmel vorfixiert werden kann.

Anhand der Zeichnung werden Ausführungsformen des Erfindungsgegenstandes erläutert. Es zeigen:
- Fig. 1: in einem Teilschnitt eine an einem Ausstattungsteil zu montierende Vorrichtung vor Abschluß der Vormontage,
- Fig. 2: einen Teilschnitt ähnlich dem von Fig. 1 nach Abschluß der Vormontage und vor einer Endmontage, und
- Fig. 3: in einem Teilschnitt eine weitere Ausführungsform einer solchen Vorrichtung nach der Endmontage.

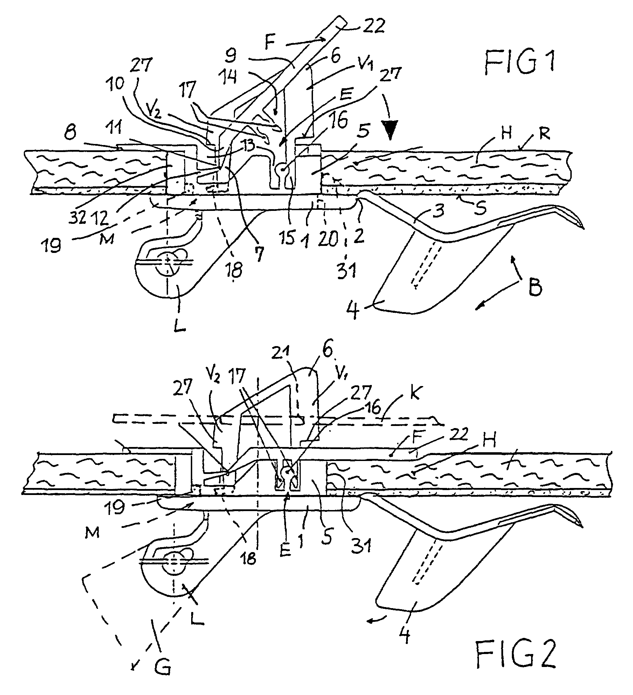

Eine Vorrichtung B gemäß den Fig. 1 und 2 dient zum Festlegen eines Ausstattungsteils H an einer Fahrzeug-Tragstruktur K (gestrichelt in Fig. 2 gezeigt), insbesondere-bei der Montage einer Kraftfahrzeugkarosserie. Der Ausstattungsteil H kann eine Dachhimmel oder eine Garniturplatte oder dgl. sein. Die Vorrichtung B kann - wie dargestellt - auch zum Befestigen eines anderen Ausstattungsteils, hier eines Haltegriffes G oder dgl., dienen und ist für diesen Zweck mit einem Lagerbock L für den Haltegriff G ausgestattet. Der Lagerbock L könnte weggelassen werden; dann dient die Vorrichtung B nur zum Befestigen des Ausstattungsteils H. Anstelle des Lagerbocks könnte die Vorrichtung auch wenigstens eine andere Befestigungseinrichtung für andere Aussattungsteile wie eine Sonnenblende, eine Armlehne, einen Rückspiegel, Beleuchtungskörper, Blenden und dgl. aufweisen (nicht gezeigt).

Die Vorrichtung ist zweckmäßigerweise ein einstückiger Kunststoff-Spritzguß-Formteil, beispielsweise aus Polyamid, und weist zweckmäßigerweise eine ästhetisch ansprechende oder dekorative Sichtseite auf.

An einen rahmenförmigen Grundkörper 1 ist mittels eines Filmscharniers oder eines Gelenks 2 eine Verschlußklappe 3 verschwenkbar angeschlossen, die einen Sperrkeil 4 trägt, dessen Zweck später erläutert wird. Die Verschlußklappe 3 könnte mit dem Sperrkeil 4 bei Bedarf auch ein eigener Kunststoff-Formteil oder Metall-Formteil sein. An der der Sichtseite abgewandten Rückseite des Grundkörpers 1 ist ein vortretender Flanschbereich 5 angeformt, der eine Einführöffnung 20 im Grundkörper 1 umgibt und eine Höhe besitzt, die in etwa der Stärke des mit der Vorrichtung zu befestigenden Ausstattungsteils H entspricht. Vom Inneren des Flanschbereiches 5 und in Verlängerung eines Einführöffnungsrandes erstreckt sich ein plattenartiges Verriegelungselement V1 annähernd senkrecht zur Ebene des Grundkörpers 1. In einem kniegelenkartigen Verbindunsbereich 6 ist an das Verriegelungselement V1 ein weiteres Verriegelungselement V2 angeschlossen, das vom Verbindungsbereich 6 zunächst schräg abfällt und dann in etwa parallel zum Verriegelungselement V1 mit einem freien Endabschnitt 7 zum Grundkörper 1 zurückführt. Der freie Endabschnitt 7 ist nicht mit dem Grundkörper 1 verbunden, so daß die beiden Verriegelungselemente V1, V2 im Verbindungsbereich 6 relativ zueinander und im Verbindungsbereich des Verriegelungselements V1 mit dem Grundkörper 1 relativ zu diesem federnd beweglich sind. An der Außenseite jedes Verriegelungselementes V1, V2 ist wenigstens eine nach außen vorspringende Stützschulter 27 angeformt. Am Flanschbereich 5 sind zumindest an einer Seite im Abstand oberhalb des Grundkörpers 1 zu diesem annähernd parallele Fixierlaschen 8 vorgesehen, die über den Umriß des Grundkörpers 1 nach außen vorstehen können. Ferner sind außen am Flanschbereich in etwa in Einsteckrichtung verlaufende Schneidstege 32 vorgesehen.

Im Flanschbereich 5 sind an zwei gegenüberliegenden Seitenbereichen in Taschen 13 Anschlußteile 12 angebracht, an denen über Filmscharniere 11 stabartige Fixierelemente F derart gehalten sind, daß sie in in etwa zum Grundkörper 1 senkrechten Ebenen zwischen einer in Fig.1 angedeuteten Einführstellung und einer in Fig. 2 angedeuteten Fixierstellung beweglich sind. Die Fixierelemente F sind Fixierzungen 9, deren Endbereiche 22 in der Fixierstellung über den Umriß . des Grundkörpers 1 nach außen vorstehen können.

Am nicht direkt mit dem Grundkörper 1 verbundenen Verriegelungselement V2 ist wenigstens ein nach außen vortretendes Eingriffselement 18 angeformt, zu dessen Eingriff im Grundkörper 1 bzw. im Flanschbereich 5 ein zweckmäßigerweise als Aufnahmetasche ausgebildetes Gegeneingriffselement 19 vorgesehen ist. Das Eingriffselement 18 ist zweckmäßigerweise ein Haken am freien Endabschnitt 7 des Verriegelungselementes V2, der in die Aufnahmetasche einbringbar ist, um den Grundkörper 1 in Ausziehrichtung mit dem Verriegelungselement V2 zu koppeln. Diese beiden Komponenten bilden einen Anschlagmechanismus M, der zweckmäßigerweise mittels des Sperrkeiles 4 betätigbar ist, sobald dieser durch die Einführöffnung 20 von unten durch den Grundkörper 1 eingetrieben wird, um die beiden Verriegelungselemente V1, V2 zu sichern.

Zwischen jeder Fixierzunge 9 und dem Grundkörper 1 ist ferner eine Verbindungseinrichtung E vorgesehen, die zweckmäßigerweise form- und /oder kraftschlüssig arbeitet und es gestattet, die Fixierzunge 9 in der Fixierstellung zu arretieren. Die Verbindungseinrichtung E besteht aus einem zangenförmigen Clip 17, beispielsweise an der Unterseite der Fixierzunge 9, und aus einem darauf ausgerichteten, verdickten Zapfen 16 in einer nach oben offenen Tasche 13 des Flanschbereiches 5. Diese Komponenten bilden form- und/oder kraftschlüssige Verbindungsteile 14, 15 der Vorrichtung B. Die Verbindungseinrichtung E und die Fixierzungen 9 könnten bei Nichtgebrauch auch weggelassen werden.

Der Ausstattungsteil H besitzt eine Sichtseite S und eine Rückseite R sowie eine Ausnehmung 31 zum Einführen der Vorrichtung B. Zur Vormontage der Vorrichtung B an dem Ausstattungsteil H noch vor dessen Montage an der Fahrzeug-Tragstruktur K (im Karosserieblech mit einem Ausschnitt 21) wird der Grundkörper 1 (mit oder ohne Haltegriff G) von der Sichtseite S mit dem Flanschbereich 5, den Verriegelungselementen V1, V2 und den in ihren Einführstellungen befindlichen Fixierzungen 9 in die Ausnehmung 31 eingeführt, bis der Grundkörper 1 an der Sichtseite S anliegt. Unter leichtem Schrägstellen werden die Fixierlaschen 8 über die Rückseite R gekippt, ehe nachfolgend die Fixierzungen 9 um ihre Filmscharniere 11 in die Fixierstellungen verschwenkt werden, in denen ihre freien Ende 22 ebenfalls auf der Rückseite R aufliegen. Bei dieser Bewegung der Fixierzungen 9 werden die Verbindungseinrichtungen E betätigt, um die Fixierzungen 9 in den Fixierstellungen festzulegen. Der verdickte Zapfen 16 tritt in das Maul des zangenartigen Clip 17 ein und hält die Fixierzunge 9 fest. Die Vorrichtung ist damit am Ausstattungsteil H vormontiert und positioniert und kann selbsttätig nicht mehr abfallen (Fig. 2). Die Schneidstege 32 können - falls vorhanden - in den Rand der Ausnehmung 31 eingreifen, um die Positionierung der Vorrichtung B zu verbessern. Der Sperrkeil 4 ist zunächst noch nicht in die Einführöffnung 20 eingebracht.

In einem weiteren Montageschritt ist nun der Ausstattungsteil H mittels der Vorrichtung B an der Fahrzeug-Tragstruktur K festzulegen. Dazu werden die Verriegelungselemente V1, V2 durch den Ausschnitt 21 geschoben, bis die Oberseiten der Fixierlaschen 8 und die Fixierzungen 9 sowie der Flanschbereich 5 an der Unterseite der Tragstruktur K anliegen. Beim Durchgang durch den Ausschnitt 21 werden die Verriegelungselemente V1, V2 federnd zueinander und relativ zum Grundkörper 1 bewegt, bis schließlich unter den federnden Rückstellkräften die Stützschultern 27 hinter die Ränder des Ausschnittes 21 greifen. Um den Eingriff der Verriegelungselemente V1, V2 zu sichern, bzw. diese in ihre endgültige Montierposition zu zwingen, wird der Sperrkeil 4 durch die Einführöffnung 20 zwischen die Verriegelungselemente V1, V2 getrieben, bis schließlich die Verschlußklappe 3 die Einführöffnung verschließt (und mit nicht dargestellten Rastgliedern an der Verschlußklappe 3 und/oder am Sperrkeil 4 festgelegt wird).

Zur Demontage sind die vorerwähnten Schritte in umgekehrtem Ablauf durchzuführen.

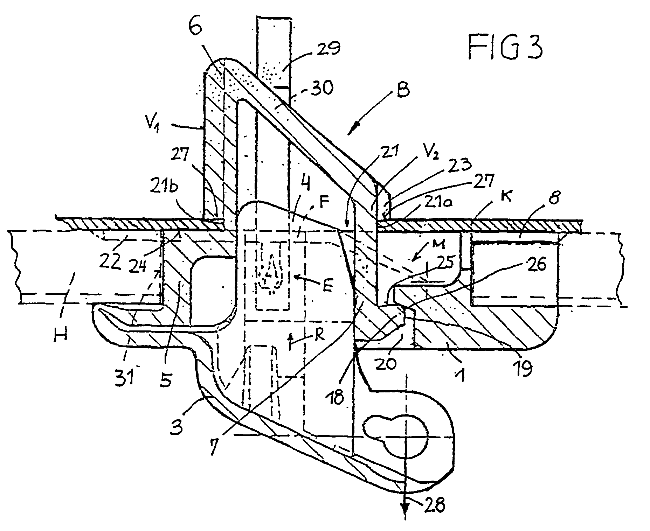

Die Vorrichtung B in Fig. 3 ist in Funktion und Aufbau der Vorrichtung B der Fig. 1 und 2 ähnlich. Sie ist in der Endmontagestellung dargestellt, in der der Ausstattungsteil H an der Tragstruktur K festgelegt und die Verriegelungselemente V1, V2 gesichert sind und mit ihren Stützschultern 27 Ausschnittsränder 21 b und 21 a des Ausschnitts 21 hintergreifen. Der Sperrkeil 4 ist durch Schließen der Verschlußklappe 3 am Grundkörper 1 zwischen die Verriegelungselemente V1, V2 eingetrieben, derart, daß der Anschlagmechanismus M betätigt ist und den Grundkörper 1 entgegengesetzt zur Einsteckrichtung R zugfest mit dem freien Endabschnitt 7 des Verriegelungselementes V2 koppelt. Der Anschlagmechanismus M ist wiederum gebildet durch den als vorspringender Haken ausgestalteten Eingriffsteil 18, der in die als zur Sichtseite des Grundkörpers 1 offen ausgebildete, den Gegeneingriffsteil 19 definierende Tasche gedrückt ist. Im Gegeneingriffsteil 19 ist eine Anzugsschräge 26 geformt, die den Flanschbereich 5 mit einer Vorspannung gegen die Tragstruktur K preßt. Der Eingriffsteil 18 kann eine hinterschnittene Fläche 25 oder ebenfalls eine Anzugsschräge aufweisen. Bei 24 ist eine Anlagefläche des Flanschbereiches 5 gezeigt. Die beiden Verriegelungselemente V1, V2 sind durch den Sperrkeil 4 im Verbindungsbereich 6 auseinandergespreizt. Die Stützschulter 27 am Verriegelungselement V2 wird von wenigstens einem nach außen ragenden Vorsprung 23 begrenzt.

Im Unterschied zu den Fig. 1 und 2 ist bei der Vorrichtung B in Fig. 3 an beiden Seiten des Verriegelungselementes V2 je eine in der Ansicht der Fig. 3 vertikal verlaufende Zunge 29 angeformt, die mit ihrem unteren Ende bis zur Einführöffnung 20 greift. In Richtung der Zeichnungsebene gesehen divergieren die Zungen 29, die bei 30 mit dem Verriegelungselement V2 verbunden sind, nach unten.

Der in den Fig. 1 und 2 gestrichelt angedeutete Anschlagmechanismus M könnte auch weggelassen werden, beispielsweise für den Fall, daß die Vorrichtung ausschließlich zum Festlegen des Ausstattungsteils H an der Tragstruktur K bestimmt und deshalb keinen nennenswerten Belastungen ausgesetzt ist.

Die Vorrichtung B gemäß Fig. 3 kann mit den Fixierlaschen 8 und den Fixierzungen F (gestrichelt angedeutet) ausgestattet sein, die in der Fixierstellung mit ihren freien Enden 22 auf den Ausstattungsteil H aufliegen, um die Vorrichtung B bei der Vormontage am Ausstattungsteil H zu fixieren. Die Fixierzungen F und die Fixierlaschen 8 müssen nicht notwendigerweise vorgesehen sein. Sind die Fixierzungen F vorgesehen, dann ist auch die Verbindungseinrichtung E vorhanden, die es ermöglicht, die Fixierzungen F in ihren Fixierstellungen mit dem Grundkörper 1 form- und/oder kraftschlüssig zu verbinden, sobald der Flanschbereich 5 in die Ausnehmung 31 des Ausstattungsteils H eingeführt worden ist. Ferner ist am Grundkörper 1 der Lagerbock L angeformt, der gegebenenfalls auch weggelassen werden kann.

Wirkt in der Endmontagestellung in Fig. 3 über den Lagerbock L eine Kraft in Richtung eines Pfeiles 28, so wird diese Kraft auf beide Ausschnittsränder 21 a, 21 b übertragen, da das Verriegelungselement V1 direkt mit dem Grundkörper 1 verbunden und das Verriegelungselement V2 durch die Betätigung des Anschlagmechanismus M in dieser Kraftrichtung mit dem Grundkörper 1 verbunden ist.

## Patentansprüche

1. Vorrichtung (B) zur schraubenlosen Montage wenigstens eines Ausstattungsteils (H, G) in einem Ausschnitt einer Fahrzeug-Tragstruktur (K), insbesondere zur Montage eines Haltegriffes an einem Karosserieblech eines Kraftfahrzeuges, mit einem federnd angeformte, an Ausschnittsrändern (21 a, 21 b) verriegelbare Verriegelungselemente (V1, V2) aufweisenden Grundkörper (1), und mit einem Sperrkeil (4), der zwischen die in den Ausschnitt (21) gesteckten Verriegelungselemente (V1, V2) eintreibbar ist, wobei wenigstens ein Verriegelungselement (V2) vom Grundkörper (1) getrennt ist, **dadurch gekennzeichnet, daß** zwischen dem Grundkörper (1) und dem vom Grundkörper (1) getrennten Verriegelungselement (V2) ein Anschlagmechanismus (M) vorgesehen ist, mit dem in montierter Position der Vorrichtung (B) der Grundkörper (1) zumindest entgegengesetzt zur Einsteckrichtung (R) an diesem Verriegelungselement (V2) abstützbar ist.

2. Vorrichtung nach Anspruch 1, **dadurch gekennzeichnet, daß** der Anschlagmechanismus (M) mittels des Sperrkeils (4) betätigbar ist.

3. Vorrichtung nach Anspruch 1, **dadurch gekennzeichnet, daß** der Anschlagmechanismus (M) aus quer zur Einsteckrichtung (R) orientierten Eingriffs- und Gegeneingriffsteilen (18, 19) am Grundkörper (1) bzw. am Verriegelungselement (V2) besteht.

4. Vorrichtung nach Anspruch 3, **dadurch gekennzeichnet, daß** der Eingriffsteil (18) wenigstens ein vorspringender Haken am Verriegelungselement (V2) und der Gegeneingriffsteil (19) wenigstens eine Haken-Aufnahmetasche im Grundkörper (1) ist.

5. Vorrichtung nach wenigstens einem der Ansprüche 3 und 4, **dadurch gekennzeichnet, daß** das Eingriffselement (18) und/oder das Gegeneingriffselement (19) eine Anzugsschräge (25, 26) aufweist.

6. Vorrichtung nach wenigstens einem der vorhergehenden Ansprüche, **dadurch gekennzeichnet, daß** der Grundkörper (1) als Rahmen mit einer Einführöffnung (20) für den Sperrkeil (4) ausgebildet ist, daß an einem ersten Rand der Einführöffnung (20) das eine Verriegelungselement (V1) angeformt ist, das sich in etwa senkrecht zum Rahmen durch die Einführöffnung (20) hindurch erstreckt und eine Stützschulter (27) für einen Ausschnittsrand (21b) aufweist, daß im Abstand hinter dem Rahmen am einen Verriegelungselement (V1) ein verformbarer Gelenkbereich (6) vorgesehen ist, in dem das vom Grundkörper (1) getrennte, andere Verriegelungselement (V2) mit dem einen Verriegelungselement (V1) verbunden ist, daß sich das andere Verriegelungselement (V2) mit einem schräg abfallenden Abschnitt und einem in etwa zum einen Verriegelungselement (V1) parallelen Endabschnitt (7) zurück zur Einführöffnung (20) erstreckt, daß am Endabschnitt (7) eine Stützschulter (27) zum Hintergreifen des anderen Ausschnittsrandes (21a) und der Eingriffsteil (18) des Anschlagmechanismus (M) vorgesehen sind, und daß der Gegeneingriffsteil (19) in einem dem ersten Rand der Eingriffsöffnung (20) gegenüberliegenden zweiten Rand der Einführöffnung (20) vorgesehen ist.

7. Vorrichtung nach wenigstens einem der vorhergehenden Ansprüche, **dadurch gekennzeichnet, daß** am Grundkörper (1) an der der Sichtseite abgewandten Rückseite ein die Einführöffnung (20) umgebender, hochstehender Flanschbereich (5) mit Anlageflächen (24) vorgesehen ist.

8. Vorrichtung nach Anspruch 7, **dadurch gekennzeichnet, daß** die Vorrichtung (B) mittels des Flanschbereiches (5) in einer Ausnehmung (31) eines an der Fahrzeug-Tragstruktur (K) festzulegenden Ausstattungsteils (H); z.B. eines Dachhimmels, lagesicherbar ist.

9. Vorrichtung nach Anspruch 8, **dadurch gekennzeichnet, daß** zur Lagesicherung im Flanschbereich (5) in Einsteckrichtung (R) verlaufende Schneidstege (32) und im Abstand vom Grundkörper (1) wenigstens eine zu diesem in etwa parallele und vorspringende Fixierlasche (8) vorgesehen ist.

10. Vorrichtung nach wenigstens einem der Ansprüche 1 bis 9, **dadurch gekennzeichnet, daß** am Grundkörper (1) am Flanschbereich (5), wenigstens eine über ein Filmscharnier (11) aus einer Einführstellung in eine Fixierstellung bewegliche Fixierzunge (9) angebracht ist, die in der Fixierstellung über den Umriß des Flanschbereiches (5) nach außen vorsteht und an der Rückseite (R) des Ausstattungteils (H) anliegt, und daß an der Fixierzunge (9) und am Grundkörper (1), im Flanschbereich (5), form- und/oder kraftschlüssige, zueinander passende Verbindungsteile (14, 15) vorgesehen sind, die gemeinsam eine Verbindungseinrichtung (E) zum Positionieren der Fixierzunge (9) in der Fixierstellung bilden.

11. Vorrichtung nach wenigstens einem der vorhergehenden Ansprüche, **dadurch gekennzeichnet, daß** die Vorrichtung (B) ein einstückiger Kunststoff-Spritzguß-Formteil ist, mit einer über ein Filmschamier (2) angeformten, den Sperrkeil (4) tragenden Verschlußklappe (3) an der Sichtseite des Grundkörpers (1).

12. Vorrichtung nach wenigstens einem der vorhergehenden Ansprüche, **dadurch gekennzeichnet, daß** sie als schraubenlose Halterung für einen Dachhimmel oder eine Garniturplatte (A) ausgebildet ist.

13. Vorrichtung nach wenigstens einem der Ansprüche 1 bis 12, **dadurch gekennzeichnet, daß** am Grundkörper (1) an der Sichtseite ein Lagerbock (11) für einen Haltegriff (G) angeformt ist.

14. Vorrichtung nach den vorhergehenden Ansprüche, **dadurch gekennzeichnet, daß** sie als schraubenlose Halterung für einen Dachhimmel oder eine Gamiturplatte (H) und gleichzeitig als Lagerbock (L) für einen Haltegriff (H) ausgebildet ist.

## Claims

1. Device (B) for the screwless installation of at least one equipment part (H, G) in a cutout in a vehicle supporting structure (K), in particular for the installation of a grab handle on a bodywork panel of a motor vehicle, having a basic body (1) which has locking elements (V1, V2) which are integrally formed in a resilient manner and can be locked to cutout edges (21a, 21b), and having a blocking wedge (4) which can be driven between the locking elements (V1, V2) placed into the cutout (21), at least one locking element (V2) being separated from the basic body (1), **characterized in that** a stop mechanism (M) is provided between the basic body (1) and the locking element (V2), which is separated from the basic body (1), and can be used, in the fitted position of the device (B), to support the basic body (1) on this locking element (V2) at least in the direction opposite to the plug-in direction (R).

2. Device according to Claim 1, **characterized in that** the stop mechanism (M) can be actuated by means of the blocking wedge (4).

3. Device according to Claim 1, **characterized in that** the stop mechanism (M) comprises engagement and mating engagement parts (18, 19), which are orientated transversely with respect to the plug-in direction (R), on the basic body (1) and on the locking element (V2).

4. Device according to Claim 3, **characterized in that** the engagement part (18) is at least one projecting hook on the locking element (V2) and the mating engagement part (19) is at least one hook-receiving pocket in the basic body (1).

5. Device according to at least one of Claims 3 and 4, **characterized in that** the engagement element (18) and/or the mating engagement element (19) has/have a retaining slope (25, 26).

6. Device according to at least one of the preceding claims, **characterized in that** the basic body (1) is designed as a frame with an introducing opening (20) for the blocking wedge (4), **in that** the one locking element (V1) is integrally formed on the first edge of the introducing opening (20), the locking element extending through the introducing opening (20) approximately perpendicular with respect to the frame and having a supporting shoulder (27) for a cutout edge (21b), **in that** a deformable articulation region (6) is provided at a distance behind the frame on the one locking element (V1), in which the other locking element (V2), which is separated from.the basic body (1), is connected to the first locking element (V1), **in that** the other locking element (V2) extends with an obliquely inclined section and an end section (7) which is approximately parallel to the first locking element (V1) back to the introducing opening (20), **in that** a supporting shoulder (27) for reaching behind the other cutout edge (21a) and the engagement part (18) of the stop mechanism (M) are provided on the end section (7), and **in that** the mating engagement part (19) is provided in a second edge of the introducing opening (20) which lies opposite the first edge of the engagement opening (20) .

7. Device according to at least one of the preceding claims, **characterized in that** the flange region (5) which surrounds the introducing opening (20) and has bearing surfaces (24) is provided on the basic body (1), on the rear side which faces away from the visible side.

8. Device according to Claim 7, **characterized in that** the device (B) can be secured in position in a recess (31) in an equipment part (H), for example a roof lining, which is to be fixed on the vehicle supporting structure (K), by means of the flange region (5).

9. Device according to Claim 8, **characterized in that**, in order to secure it in position in the flange region (5), cutting webs (32) which run in the plug-in direction (R) are provided and, at a distance from the basic body (1), at least one projecting fixing clip (8) which is approximately parallel to the said basic body is provided.

10. Device according to at least one of Claims 1 to 9, **characterized in that** at least one fixing tongue (9) which can be moved from an introducing position into a fixing position via a film hinge (11) is attached to the basic body (1) in the flange region (5), protrudes. outwards, in the fixing position, beyond the contour of the flange region (9) and bears against the rear side (R) of the equipment part (H), and **in that** positive-and/or nonpositive-locking connecting parts (14, 15) which are matched to each other are provided on the fixing tongue (9) and on the basic body (1), in the flange region (5), and together form a connecting device (E) for positioning the fixing tongue (9) in the fixing position.

11. Device according to at least one of the preceding claims, **characterized in that** the device (B) is a single-piece injection-moulded plastic part with, on the visible side of the basic body (1), a closure cap (3) which is integrally formed on it via a film hinge (2) and bears the blocking wedge (4).

12. Device according to at least one of the preceding claims, **characterized in that** it is designed as a screwless securing means for a roof lining or a mounting plate (H).

13. Device according to at least one of Claims 1 to 12, **characterized in that** a bearing bracket (11) for a grab handle (G) is integrally formed on the visible side of the basic body (1).

14. Device according to the preceding claims, **characterized in that** it is designed as a screwless securing means for a roof lining or a mounting plate (H) and at the same time as a bearing block (L) for a grab handle (G).

## Revendications

1. Dispositif (B) pour le montage sans vis d'au moins une pièce d'équipement (H, G) dans une découpe d'une structure portante de véhicule (K), en particulier pour le montage d'une poignée de maintien sur une tôle de carrosserie d'un véhicule automobile, avec un corps de base (1) formé de façon élastique, présentant des éléments de verrouillage (V1, V2) pouvant être verrouillés sur des bords de découpe (21a, 21b), et avec une clavette de blocage (4), qui peut être introduite entre les éléments de verrouillage (V1, V2) enfichés dans la découpe (21), au moins un élément de verrouillage (V2) étant séparé du corps de base (1), **caractérisé en ce qu'**il est prévu entre le corps de base (1) et l'élément de verrouillage (V2) séparé du corps de base (1) un mécanisme de butée (M) avec lequel le corps de base (1) peut être soutenu sur cet élément de verrouillage (V2) du moins dans le sens opposé au sens d'emboîtement (R) dans la position montée du dispositif (B).

2. Dispositif selon la revendication 1, **caractérisé en ce que** le mécanisme de butée (M) peut être actionné au moyen de la clavette de blocage (4).

3. Dispositif selon la revendication 1, **caractérisé en ce que** le mécanisme de butée (M) comprend des parties d'engrènement et des parties de contre-engrènement (18, 19), orientées transversalement au sens d'emboîtement (R), sur le corps de base (1) ou sur l'élément de verrouillage (V2).

4. Dispositif selon la revendication 3, **caractérisé en ce que** la partie d'engrènement (18) est au moins un crochet saillant sur l'élément de verrouillage (V2) et la partie de contre-engrènement (19) au moins une poche de logement pour crochet dans le corps de base (1).

5. Dispositif selon au moins l'une quelconque des revendications 3 et 4, **caractérisé en ce que** l'élément d'engrènement (18) et/ou l'élément de contre-engrènement (19) présente(nt) un chanfrein de serrage (25, 26).

6. Dispositif selon au moins l'une quelconque des revendications précédentes, **caractérisé en ce que** le corps de base (1) est conçu comme cadre avec une ouverture d'introduction (20) pour la clavette de blocage (4), **en ce que** l'un élément de verrouillage (V1) est formé sur un premier bord de l'ouverture d'introduction (20), lequel élément s'étend à peu près perpendiculairement au cadre à travers l'ouverture d'introduction (20) et présente un épaulement d'appui (27) pour un bord de découpe (21b), **en ce qu'**il est prévu à distance derrière le cadre sur un élément de verrouillage (V1) une zone d'articulation (6) déformable, dans laquelle l'autre élément de verrouillage (V2) séparé du corps de base (1) est relié à l'un élément de verrouillage (V1), **en ce que** l'autre élément de verrouillage (V2) s'étend avec une partie descendant en biais et une partie d'extrémité (7) à peu près parallèle à un élément de verrouillage (V1) en retrait par rapport à l'ouverture d'introduction (20), **en ce qu'**un épaulement d'appui (27) pour l'engagement par l'arrière de l'autre bord de découpe (21a) et la partie d'engrènement (18) du mécanisme de butée (M) sont prévus sur la partie d'extrémité (7) et **en ce que** la partie de contre-engrènement (19) est prévue dans un second bord de l'ouverture d'introduction (20) opposé au premier bord de l'ouverture d'engrènement (20).

7. Dispositif selon au moins l'une quelconque des revendications précédentes, **caractérisé en ce qu'**une zone de bride (5) entourant l'ouverture d'introduction (20) surélevée avec des surfaces d'appui (24) est prévue sur le corps de base (1) sur le côté arrière opposé au côté visible.

8. Dispositif selon la revendication 7, **caractérisé en ce que** le dispositif (B) peut être bloqué en position au moyen de la zone de bride (5) dans un évidement (31) d'une partie d'équipement (H) à fixer sur la structure portante de véhicule (K) ; par exemple d'un habillage de plafond de véhicule.

9. Dispositif selon la revendication 8, **caractérisé en ce que**, pour le blocage de position dans la zone de bride (5), il est prévu des nervures de coupe (32) agencées dans le sens d'emboîtement (R) et à distance du corps de base (1) au moins une patte de fixation (8) à peu près parallèle à ce corps de base et faisant saillie.

10. Dispositif selon au moins l'une quelconque des revendications 1 à 9, **caractérisé en ce que** sur le corps de base (1) sur la zone de bride (5) est appliquée au moins une languette de fixation (9) pouvant être déplacée au moyen d'une charnière en film (11) d'une position d'introduction à une position de fixation, qui déborde vers l'extérieur dans la position de fixation au moyen du pourtour de la zone de bride (5) et s'appuie sur le côté arrière (R) de la partie d'équipement (H), et **en ce que** des parties d'assemblage (14, 15) adaptées les unes aux autres, montées par complémentarité de forme et/ou par force, sont prévues sur la languette de fixation (9) et sur le corps de base (1) dans la zone de bride (5), qui forment ensemble un dispositif d'assemblage (E) pour le positionnement de la languette de fixation (9) dans la position de fixation.

11. Dispositif selon au moins l'une quelconque des revendications précédentes, **caractérisé en ce que** le dispositif (B) est une pièce moulée en plastique injecté d'un seul tenant, avec un clapet de fermeture (3) formé au moyen d'une charnière en film (2) et portant la clavette de blocage (4) sur le côté visible du corps de base (1).

12. Dispositif selon au moins l'une quelconque des revendications précédentes, **caractérisé en ce qu'** il est conçu comme un support sans vis pour un habillage de plafond de véhicule ou une plaque de garniture (A).

13. Dispositif selon au moins l'une quelconque des revendications 1 à 12, **caractérisé en ce qu'**un support de palier (11) pour une poignée de retenue (G) est formé sur le corps de base (1) sur le côté visible.

14. Dispositif selon les revendications précédentes, **caractérisé en ce qu'**il est conçu comme un support sans vis pour un habillage de plafond de véhicule ou une plaque de garniture (H) et en même temps comme support de palier (L) pour une poignée de retenue (H).
